# EUROPEAN PATENT APPLICATION

(11) **EP 0 554 646 A1**
(43) Date of publication of application: **11.08.1993**
(21) Application number: 92830609.1
(22) Date of filing: 04.11.1992
(51) Int. Cl.: B30B 9/30, B02C 19/14

(54) **Device for compressing plastic bottles, PVC bottles or the like, after such bottles have been emptied**

(30) Priority: 11.11.1991 IT VR910062 U
(71) Applicant: LEPANTO INVENTIONS S.r.l., I-37069 Villafranca di Verona (Verona) (IT)
(72) Inventor: Morandini, Amorino, I-37069 Villafranca di Verona (Verona) (IT)
(74) Representative: Sarpi, Maurizio

(57) **Abstract**

The above mentioned device overcomes certain problems related to the excessive space occupied by used plastic bottles in such that the bottles may be reduced to a volume so that their stacking together is less bulky and easier.

The device is essentially composed of a tubular element (1) which is the container of a compressible plastic bottle and of a hollow rod (2) acting as a compression element.

The top of the rod (2) is provided with a pair of opposing handles (3) and the sides with guiding fins (4) radially positioned around the rod and covering a certain length of it, whilst the base presents a tapered and carved mouthpiece.

Once the bottle is introduced into the tubular container (1) it is sufficient to introduce the rod (2) from above and then to push it with a certain pressure by the handles (3).

## Description

The subject of this invention patent is a device capable of compressing empty plastic bottles, PVC or similar, resulting in a reduction of their bulkiness to ease their collection and disposal.

According to a well known technology, presently plastic or PVC bottles are used increasingly to contain soft drinks because they are unbreakable, easier to manufacture and, above all, economically viable compared to the glass bottles.

However, these plastic bottles, which often contain a liter and a half or even two liters of liquid, once used are very bulky especially when one considers that before being disposed of they are grouped together in a certain number in order to limit the frequency of transportation to one of the special containers for the differential disposal of waste and in particular for the collection of plastics, often not as easy to find as the usual chests.

Is not uncommon for the consumer to face the option of disposal of each single empty bottle with the ordinary waste, which is against ecological principles of plastic recycling, or alternatively to group together a certain number of empty bottles with the consequent excessive occupation of space in inappropriate areas, and the difficulty of transporting a voluminous group of bottles.

Adoption of the present invention resolves the problems due to excessive bulkiness of used plastic bottles and their disposal, in that a most simple and functional device has been conceived and realized which is capable of reducing the space occupied by the empty bottles to a volume such that their stacking together is much less bulky and easier.

Within the scope of this general aim, the above invention in particular allows the used plastic bottles, given their squashable nature, to be compressed by exerting a certain pressure, causing a remarkable reduction in their volume, in order to ease their grouping together and transport to the special containers for the collection of plastics.

Finally, an other advantage gained by the compression of the bottle is the reduction in the need to empty the collection containers in that they, given the compression of the volume of the bottle, are filled less frequently therefore the collection of the plastics becomes less onerous for the specialized personnel.

The invention refers indeed to a device for the compression of plastic bottles, PVC or similar, after emptying, characterized by the fact of being made up of a tubular body open at both ends, capable of retaining a moving rod equipped with handles and radially positioned guiding fins; said rod being able to be inserted into the tubular body and moved in it via contact with said guiding fins along the internal surface of the tube itself; the base of said rod being shaped in order to be able to retain the neck of a bottle inserted in the tubular body, and to compress it on itself via the downward pressure of the rod executed on the handles.

The invention may be better unders tood from the foil owing description, as much as from the attached drawing, in which:

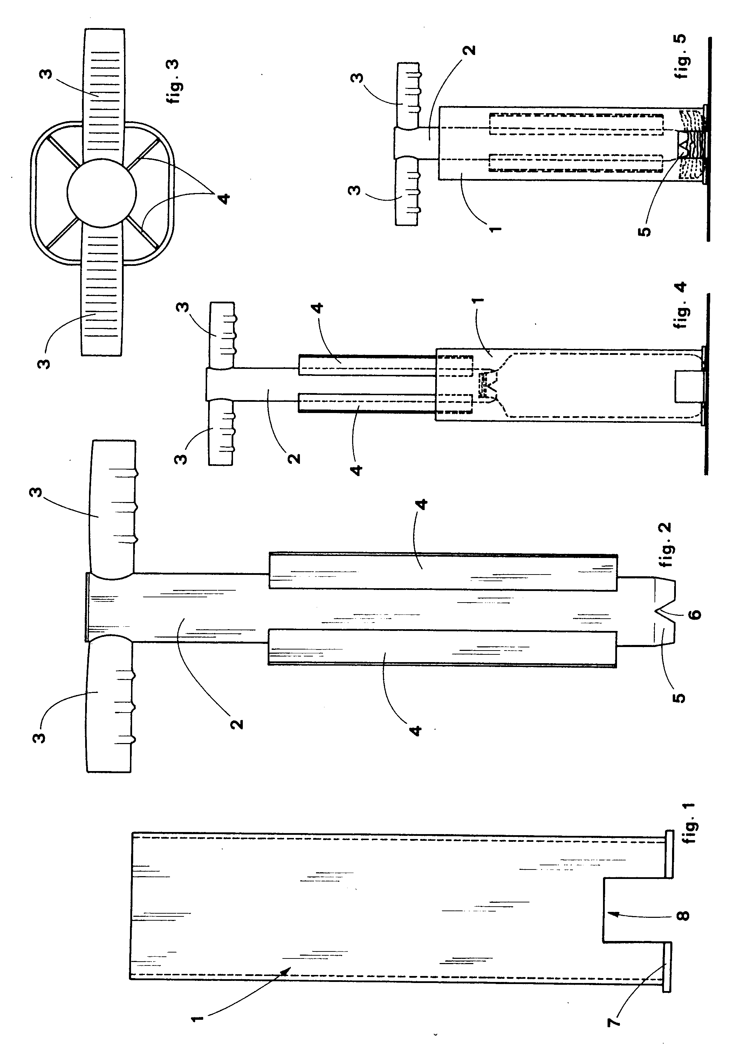

Fig. 1 shows a schematic front view of the tubular element;
Fig. 2 illustrates a schematic front view of the moving rod;
Fig. 3 is a schematic plan view of the whole invention;
Figs. 4 and 5 show schematic view of the device as found before and after the compression of a plastic bottle respectively.

With reference to the attached figures, 1 indicates the tubular element which is the container of a plastic bottle capable of being compressed by the device as found, for an easier collection and disposal.

The tubular element has a cross section basically square with rounded corners capable of housing a hollow rod 2 which is the compression element. The top of rod 2 is equipped with a pair of opposing handles 3 and the sides with fins 4 radially positioned along a certain length of the rod, whereas the base has a tapered mouthpiece 5 with carvings 6.

The guiding fins 4 are positioned radially so that with the insertion of the rod into the tubular element, they come in to contact with the rounded parts of the corners, with the possibility of sliding along them.

At the base of the tube 1 there is a lean-on seal 7 and a couple of openings allowing the squashed bottle to be picked up and removed after compression.

The use of the said bottle compressing device needs a few simple operations, i.e. removing of the rod from the tubular element is 1 standing on the ground, in order to permit the introduction of an empty bottle from above, the bottle itself having no cap to impede the escape of air.

Once the bottle is inserted in the tubular element 1 it is sufficient to introduce the rod from above so that the mouthpiece 5 inserts itself into the neck of the bottle, and then to exert a certain pressure on the rod itself by the handles 3.

The peculiar shape of mouthpiece 5 and its carvings 6 cause the first folding of the bottle and at the next pressure of the rod the lower part of the fins 4 come in to contact with the bottle resulting in a complete squashing of it.

At this point it is sufficient to raise the tubular element and to pick up the compressed bottle through the openings 8 so that the bottle may be placed in a reduced space for its successive disposal along with similarly treated bottles. To ensure the complete reduction of the volume of the squashed bottle as well its retaining this form, the cap is screwed on it after having removed the remaining air with a further pressure by hand.

It may be noted that the fins 4 have the double function of acting as guiding elements of the rod and of compressing the bottle which is thus compressed more easily in a more homogeneous and complete manner.

Moreover the shape of the tubular element 1 is such that it may contain any form of bottle, either round or square.

The compressing device described here may also be realized in similar forms which must be considered within the field covered by the present invention.

## Claims

**1)** Device for the compression of plastic bottles, PVC or similar, after emptying, characterized by the fact that it is made up of a tubular body (1) open at both ends capable of housing a moving rod (2) equipped with handle (3) and radially positioned guiding fins (4); said rod (2) being able to be inserted into the tubular body (1) and to slide within it via contact of said guiding fins (4) along the inner surface of the tube (1) itself; the lower end of said rod (2) being shaped in such a way as to be able to accomodate the neck of a bottle inserted in the tubular body (1) and to compress it on itself via a downward pressure of the rod (2) exerted on the handle (3).

**2)** Device for the compression of bottles according to the previous claim, characterized by the fact that said tubular element (1) has a cross-section which is preferably squared with rounded corners in order that the fins (4) of said rod (2) may slide along the rounded sides of the tube (1) itself.

**3)** Device for the compression of bottles according to the previous claims, characterized by the fact that at the base of the tube (1) there is a lean-on seal (7) and a pair of operings (8) allowing the squashed bottle to be picked up and removed af ter compression.

**4)** Device for the compression of bottles according to the previous claims, characterized by the fact that the guiding fins (4) are positioned radially so that, with the insertion of the rod (2) into the tubular element (1), they come into contact with the rounded parts of the corners with the possibility of sliding along them.

**5)** Device for the compression of bottles according to the previous claims, characterized by the fact that said fins (4) have the double function of acting as guiding elements of the rod (2) and of compressing the bottle.
